# EUROPEAN PATENT APPLICATION

(11) **EP 2 452 919 A1**
(43) Date of publication of application: **16.05.2012**
(21) Application number: 10797173.1
(22) Date of filing: 08.07.2010
(51) Int. Cl.: C01B 33/037

(54) **SILICON REFINING DEVICE AND METHOD**

(30) Priority: 09.07.2009 JP 2009162947
(71) Applicant: Sharp Kabushiki Kaisha, Osaka-shi, Osaka 545-8522 (JP)
(72) Inventor: MATSUMOTO, Masayuki, Osaka-shi Osaka 545-8522 (JP); NOHNO, Ryuji, Osaka-shi Osaka 545-8522 (JP); SUGIOKA, Ryohichi, Osaka-shi Osaka 545-8522 (JP); HOJE, Miho, Osaka-shi Osaka 545-8522 (JP); YAMANE, Satoshi, Osaka-shi Osaka 545-8522 (JP); HIGO, Teruaki, Osaka-shi Osaka 545-8522 (JP)
(74) Representative: Müller - Hoffmann & Partner
(86) International application number: PCT/JP2010/061612
(87) International publication number: WO 2011/004862

(57) **Abstract**

The first aspect of a silicon refining apparatus of the present invention is a silicon refining apparatus including, in a reduced pressure vessel: a crucible (1) capable of holding molten silicon (2); a heat-retaining lid (5) capable of being placed over the crucible (1); and a heating device (3) heating the molten silicon (2). The crucible (1) has a lateral outer-circumferential portion provided with a first thermal-insulation material (4). The heat-retaining lid (5) is a plate-like member (502) made of carbon felt and provided with a carbon composite material (501a, 501b) at least on opposed main surfaces. The heat-retaining lid (5) has opposed main surfaces with an opening (6) formed to extend therethrough. The carbon composite material (501a) on the main surface of the heat-retaining lid (5) on the crucible (1) side is so placed as to cover an upper surface of the first thermal-insulation material (4) when the heat-retaining lid (5) is placed at an upper surface of the crucible (1).

## Description

### TECHNICAL FIELD

The present invention relates to an apparatus for refining silicon and a method for refining silicon.

### BACKGROUND ART

In light of environmental problems, use of natural energies as an alternative to petroleum and the like has been attracting attention. Among others, solar cells that employ photoelectric conversion principle of silicon semiconductors have such a feature that conversion of solar energy into electricity can easily be carried out. However, in order for the solar cells to become widespread, the cost of the solar cells, in particular, of semiconductor silicon, must be reduced.

As to high-purity silicon used for semiconductor integrated circuits and the like, metallic silicon obtained by carbon reduction of silica and having a purity of the order of between 98% and 99% is used as a raw material, from which trichlorosilane (SiHCl₃) is synthesized through a chemical method and then purified through distillation and thereafter reduced to thereby produce high-purity silicon with a purity of the order of so-called 11N (eleven nines) (Siemens process). However, this high-purity silicon requires a complicated manufacturing plant and greater energy for reduction, and therefore it is inevitably an expensive material.

In contrast, the purity required for silicon used for manufacturing solar cells is of the order of 6N. Therefore, non-standard products of such high-purity silicon for semiconductor integrated circuits and the like are of an excessively high quality for solar cells.

For this reason, to reduce the cost of solar cells, direct metallurgical refining from metallic silicon has been attempted.

It is known that among the impurities that should be removed from metallic silicon, impurities having a vapor pressure higher than that of silicon, such as phosphorus, can be removed by being held in a vacuum when in a molten state (hereinafter sometimes referred to as vacuum refining process).

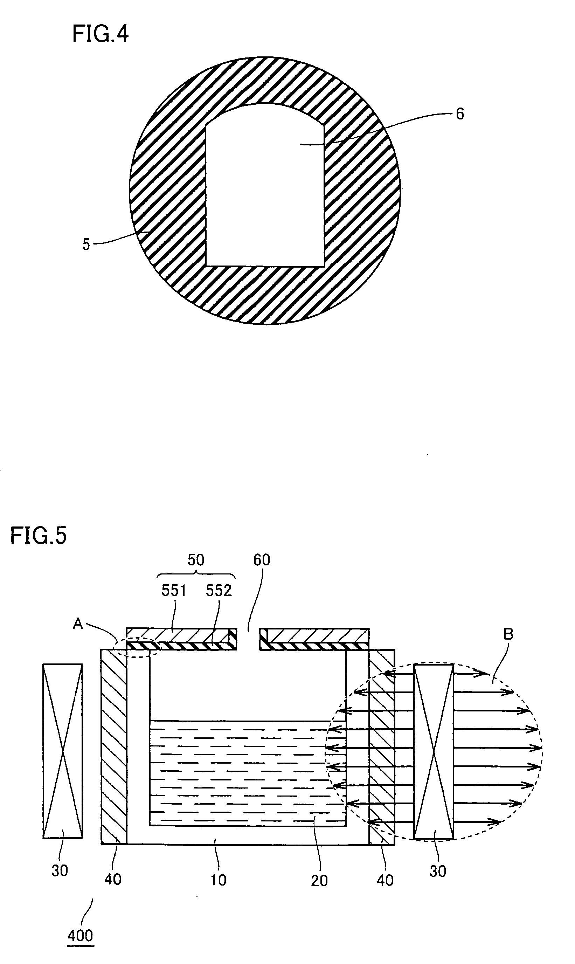

For instance, Japanese Patent Laying-Open No. 2006-232658 (PTL 1) discloses "a silicon refining apparatus including, in a reduced pressure vessel equipped with a vacuum pump, a crucible made of graphite and receiving silicon and a heating device heating the crucible and placed at such a position as to cover the lateral and bottom surfaces of the crucible". Further, PTL1 also discloses that for the purpose of reducing vertical temperature variations of molten silicon, the crucible has an upper surface having a member for heat retention disposed thereon, which is described as basically made of a thermal-insulation material such as graphite felt and as preferably having a structure in which the lower and lateral surfaces are covered with a high-density member made of graphite (see Fig. 5).

### CITATION LIST

### PATENT LITERATURE

PTL 1: Japanese Patent Laying-Open No. 2006-232658

### SUMMARY OF INVENTION

### TECHNICAL PROBLEM

The problem found by the present inventors in carrying out a study of a silicon refining (dephosphorization) process employing the vacuum refining process using laboratory equipment for refining silicon as shown in Fig. 5 and formed of a crucible 10, a heat-retaining member 50, and a heating device 30, is that in such conventional structure and arrangement of a heat-retaining member, thermal dissipation from molten silicon cannot be effectively suppressed and temperature variations occur in the vertical direction of the crucible.

The reason for the occurrence of the temperature variations in the vertical direction of the crucible in the conventional silicon refining apparatus will be described in detail. As described above, Fig. 5 is a schematic cross sectional view showing one example of a conventional silicon refining apparatus 400 which has a crucible 10 having heat-retaining member 50 disposed thereon. Fig. 5 shows a state in which crucible 10 holds molten silicon 20 which is being heated by heating device 30. It is noted that crucible 10 has a lateral outer-circumference covered with a lateral thermal-insulation material 40.

Further, crucible 10 has an upper surface having a heat-retaining member 50 disposed thereon. Heat-retaining member 50 is a flat, plate-like member having a structure in which part of carbon felt 551 is covered with a carbon composite material 552.

It is noted that an opening 60 extending through heat-retaining member 50 is an aperture which is provided for discharging silicon vapor containing molten silicon impurities (primarily phosphorus) out of the crucible in the vacuum refining process.

The study by the present inventors has revealed that silicon refining apparatus 400 as shown in Fig. 5 has the following two problems.
· Problem 1: Silicon vapor containing molten silicon impurities moves along an interface (shown in Fig. 5 with a reference sign A) between heat-retaining member 50 and crucible 10 and comes into contact with lateral thermal-insulation material 40 and condenses here, thereby causing a degradation in thermal-insulation properties of the top portion of lateral thermal-insulation material 40 (near the boundary relative to heat-retaining member 50), and therefore, temperature variations occur in the vertical direction of the crucible. In particular, when lateral thermal-insulation material 40 is made of carbon felt, the insulation material reacts with silicon vapor, and consequently, the degradation in thermal-insulation properties is evident.
· Problem 2: Since a carbon composite have a thermal conductivity higher than that of carbon felt, in the conventional structure in which the top surface of crucible 10 and carbon composite material 552 are in contact with each other, thermal transfer from crucible 10 to heat-retaining member 50 causes temperature variations in the vertical direction of crucible 10. Fig. 5 shows a conceptual diagram of a range of generation of a magnetic field when heating device 30 is an inductive heating device. As can be seen, when heating device 30 is an inductive heating device, the magnetic field generated from a high-frequency coil is weak on the opposing ends of the coil, and in addition, it is difficult for the bottom portion of crucible 10 to have low temperatures because of thermal conduction from molten silicon 20, and consequently, temperature variations in the vertical direction of crucible 10 is evident.

When temperature variations in the vertical direction of a crucible occur in this way, breakage during a silicon refining process is likely to occur, which can result in a shorter life (duration of continuous use) of the crucible.

The present invention has been made in view of the problems above, and an object of the invention is to provide a silicon refining apparatus and a method for refining silicon which are capable of suppressing temperature variations in the vertical direction of a crucible.

### SOLUTION TO PROBLEM

A silicon refining apparatus according to the present invention is a silicon refining apparatus comprising, in a reduced pressure vessel: a crucible capable of holding molten silicon; a heat-retaining lid capable of being placed over the crucible; and a heating device heating the molten silicon, the crucible having a lateral outer-circumferential portion provided with a first thermal-insulation material, the heat-retaining lid being a plate-like member made of carbon felt and provided with a carbon composite material at least on opposed main surfaces, the heat-retaining lid having opposed main surfaces with an opening formed to extend therethrough, and the carbon composite material on the main surface of the heat-retaining lid on an crucible side being so placed as to cover an upper surface of the first thermal-insulation material when the heat-retaining lid is placed at an upper surface of the crucible.

In addition, a silicon refining apparatus of the present invention is a silicon refining apparatus comprising, in a reduced pressure vessel: a crucible capable of holding molten silicon; a heat-retaining lid capable of being placed over the crucible; and a heating device heating the molten silicon, the crucible having a lateral outer-circumferential portion provided with a first thermal-insulation material, the heat-retaining lid being a plate-like member made of carbon felt and provided with a carbon composite material at least on opposed main surfaces, the heat-retaining lid having opposed main surfaces with an opening formed to extend therethrough, and the crucible having an upper surface having a second thermal-insulation material placed thereon such that the upper surface of the crucible and the heat-retaining lid do not directly contact with each other.

In addition, in another aspect, a silicon refining apparatus of the present invention is a silicon refining apparatus comprising, in a reduced pressure vessel: a crucible capable of holding molten silicon; a heat-retaining lid capable of being placed over the crucible; and a heating device heating the molten silicon, the crucible having a lateral outer-circumferential portion provided with a first thermal-insulation material, the heat-retaining lid being a plate-like member made of carbon felt and provided with a carbon composite material at least on opposed main surfaces, the heat-retaining lid having opposed main surfaces with an opening formed to extend therethrough, the carbon composite material on the main surface of the heat-retaining lid on an crucible side being so placed as to cover an upper surface of the first thermal-insulation material when the heat-retaining lid is placed at an upper surface of the crucible, and the upper surface of the crucible having a second thermal-insulation material placed thereon such that the upper surface of the crucible and the heat-retaining lid do not directly contact with each other.

In addition, in a still another aspect, a silicon refining apparatus of the present invention is a silicon refining apparatus comprising, in a reduced pressure vessel: a crucible capable of holding molten silicon; a heat-retaining lid capable of being placed over the crucible; and a heating device heating the molten silicon, the crucible having a lateral outer-circumferential portion provided with a first thermal-insulation material, the heat-retaining lid being a plate-like member made of carbon felt and provided with a carbon composite material at least on opposed main surfaces, the heat-retaining lid having opposed main surfaces with an opening formed to extend therethrough, the carbon composite material on the main surface of the heat-retaining lid on a crucible side being so placed as to cover an upper surface of the first thermal-insulation material when the heat-retaining lid is placed at an upper surface of the crucible, and the upper surface of the crucible having a second thermal-insulation material placed thereon such that the upper surface of the crucible and the heat-retaining lid do not directly contact with each other.

In addition, in any of the aspects above, that is, in the aspect in which the carbon composite material provided on a molten silicon side is so arranged as to cover the upper surface of the first thermal-insulation material and/or in the aspect in which the upper surface of the crucible has a second thermal-insulation material placed thereon such that the upper surface of the crucible and the heat-retaining lid do not directly contact with each other, a silicon refining apparatus of the present invention uses a heat-retaining lid that has a protruding portion at a position inside an inner wall of an opening of the crucible when placed at the upper surface of the crucible, is provided with a carbon composite material at least on a molten silicon side of the protruding portion, and is arranged such that a lowermost portion of the protruding portion is located on a molten silicon side relative to an upper rim of the opening of the crucible when placed at the upper surface of the crucible.

Furthermore, a method for refining silicon of the present invention is a method using any of the silicon refining apparatuses above and includes the step of refining molten silicon held in the crucible by reducing an internal pressure of the reduced pressure vessel that accommodates the crucible, the heat-retaining lid, and the heating device.

### ADVANTAGEOUS EFFECTS OF INVENTION

The present invention can reduce temperature variations in the vertical direction of a crucible, and thus can provide an enhanced life (period of time for which continuous use is possible) of the crucible in a silicon refining apparatus.

### BRIEF DESCRIPTION OF DRAWINGS

Fig. 1 is a schematic cross sectional view showing one example of a silicon refining apparatus of a first embodiment.
Fig. 2 is a schematic cross sectional view showing one example of a silicon refining apparatus of a second embodiment.
Fig. 3A is a schematic cross sectional view showing one example of a silicon refining apparatus of a third embodiment.
Fig. 3B is a schematic cross sectional view of another example of the silicon refining apparatus of the third embodiment.
Fig. 4 is a schematic plan view of a heat-retaining lid in an example.
Fig. 5 is a schematic cross sectional view showing one example of conventional silicon refining apparatuses.

### DESCRIPTION OF EMBODIMENTS

The present invention is based on the findings above, and embodiments of the invention will be hereinafter described. The following description of the embodiments uses drawings for explanation purpose. In the drawings of the present application, those having the same reference signs allotted represent the same or corresponding portions.

### First Embodiment

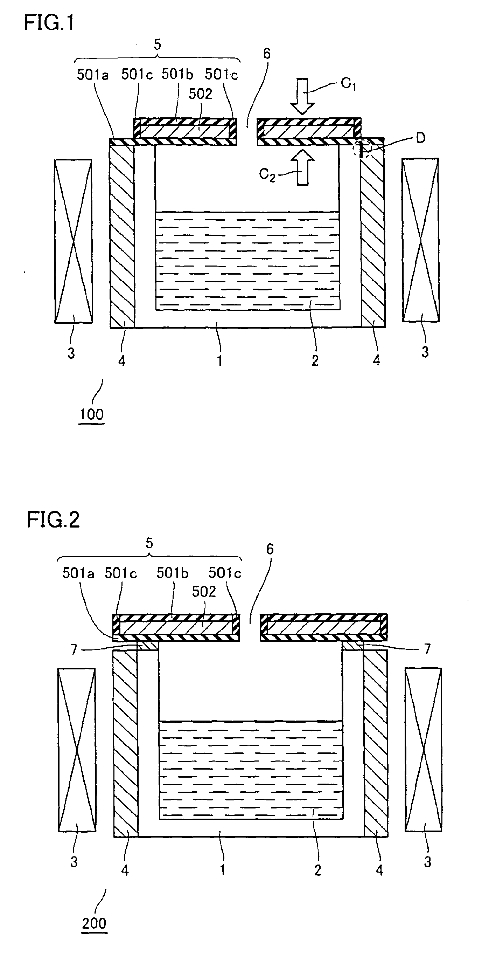

Fig. 1 is a schematic cross sectional view showing one example of a silicon refining apparatus of a first embodiment. A silicon refining apparatus 100 of the first embodiment includes, in a reduced pressure vessel (not shown): a crucible 1 capable of holding molten silicon; a heat-retaining lid 5 capable of being placed over crucible 1; and a heating device 3 heating the molten silicon.

Crucible 1 above may be any crucible having such heat resistance as to be able to hold the molten silicon, and for example, a crucible made of carbon can be used. In the present invention, crucible 1 is provided with a first thermal-insulation material 4 covering its lateral outer-circumferential portion, as shown in Fig. 1. For first thermal-insulation material 4, any material having thermal-insulation properties can be used without any particular limitation.

Over such crucible 1, heat-retaining lid 5 is arranged. Heat-retaining lid 5 includes a plate-like member 502 which is made of carbon felt and provided with a carbon composite material 501a and a carbon composite material 501b at least on its opposed main surfaces. In Fig. 1, one main surface of plate-like member 502 is provided with carbon composite material 501a, and the other surface is provided with carbon composite material 501b, so that plate-like member 502 is interposed and held therebetween. In addition, a carbon composite material 501c is provided on the lateral surfaces of plate-like member 502, so that these carbon composite materials and the plate-like member make up a structure (heat-retaining lid).

Heat-retaining lid 5 has opposed main surfaces, through which an opening 6 is formed. Through opening 6, silicon vapor dissipates out of the crucible.

In the first embodiment, carbon composite material 501a on the lower surface side (the side facing molten silicon 2) of plate-like member 502 when heat-retaining lid 5 is placed over crucible 1, is so placed as to cover an upper surface of the crucible and an upper surface of lateral, first thermal-insulation material 4.

The configuration as above makes it possible to suppress development of the phenomenon, which has been illustrated as the aforementioned Problem 1, in which silicon vapor moves along a gap between heat-retaining lid 5 and crucible 1, comes into contact with lateral thermal-insulation material 4, and condenses at its point of contact. More specifically, this is considered to be due to the fact that in the first embodiment, carbon composite material 501a is so placed as to cover up to the upper surface of first thermal-insulation material 4 on the lateral surface of the crucible, and therefore, the first solidification of silicon occur at a point of contact between carbon composite material 501a and the crucible side of lateral, first thermal-insulation material 4 (near the area shown in Fig. 1 with a reference sign D), and the solidified silicon serving as an obstacle, and, if first thermal-insulation material 4 is made of carbon felt, occurrence of a reaction between silicon and carbon as well, prevent subsequent diffusion of silicon vapor and thus make it difficult for any further solidification and reaction to develop. In contrast, with the conventional structure illustrated in Fig. 5, silicon vapor passing through a gap between heat-retaining member 50 and crucible 10 makes an exit to an open space, and therefore, the solidification and the reaction are considered to develop from various places of lateral thermal-insulation material 40.

It is noted that "main surface" in the present invention is, as shown in Fig. 1, a surface facing right opposite to molten silicon 2 (a lower surface C₂) when heat-retaining lid 5 is placed at the upper surface of crucible 1, and its opposed surface (an upper surface C₁). One reason for arranging the carbon composite material not only at lower surface C₂ but also at upper surface C₁ is that silicon vapor went out of crucible 1 from opening 6 extending through heat-retaining lid 5 has nonnegligible effects on upper surface C₁ of heat-retaining lid 5. Examples of such effects include that if the plate-like member made of carbon felt is not covered with the carbon composite material, the plate-like member may react with silicon vapor and consequently have degraded thermal-insulation properties. Another reason is that arranging the carbon composite material also at upper surface C₁ facilitates maintenance of the shape of heat-retaining lid 5 and handling of the same. In this context, it is preferable for the carbon composite material covering upper surface C₁ to have a greater thickness than that of the carbon composite material covering lower surface C₂. This is because it is preferable for the carbon composite material of lower surface C₂ to be thin so as to reduce thermal conductivity, whereas it is necessary for the carbon composite material of upper surface C₁ to have a certain degree of thickness (of the order of generally not less than 1 mm and not more than 5 mm, preferably not less than 2 mm and not more than 3 mm) so as to facilitate maintenance of the shape of the carbon composite material and handling of the same.

### Second Embodiment

Fig. 2 provides a schematic cross sectional view showing one example of a silicon refining apparatus of a second embodiment, which has the same configuration as that of silicon refining apparatus 100 shown in Fig. 1 except the arrangement of the heat-retaining lid. Therefore, a description of common portions will not be repeated.

A silicon refining apparatus 200 of the second embodiment is a silicon refining apparatus in which crucible 1 has an upper surface on which a second thermal-insulation material 7 is placed so that the upper surface of crucible 1 and heat-retaining lid 5 do not contact each other. The above-described carbon composite material 501a on the main surface of heat-retaining lid 5 on the crucible side is so placed as to indirectly cover the upper surface of first thermal-insulation material 4.

The placement of second thermal-insulation material 7 on an upper surface portion of crucible 1 makes it possible to suppress the phenomenon which has been illustrated in the aforementioned Problem 2, that is, in which thermal transfer from the crucible to heat-retaining lid 5 serving as a heat-retaining member causes temperature variations in the vertical direction of the crucible.

In addition, second thermal-insulation material 7 on the upper surface serves as a barrier against a contact between first thermal-insulation material 4 and silicon vapor, and therefore, concurrently with Problem 2 above, the aforementioned Problem 1 can also be solved.

It is noted that when carbon felt is used as second thermal-insulation material 7, it reacts with silicon vapor and thus has degraded thermal-insulation properties with time, as with the aforementioned lateral, first thermal-insulation material 4. However, as far as the study by the present inventors is concerned, in contrast to a degradation in thermal-insulation properties of lateral, first thermal-insulation material 4, which led to breakage of the crucible itself in some circumstances once it occurred, a degradation in thermal-insulation properties of second thermal-insulation material 7 on the upper surface was (even though undesirable) never the cause of breakage of the crucible.

For second thermal-insulation material 7 above, for example, a thermal-insulation material which has been shaped into any desired shape can be used in addition to carbon felt. In addition, although second thermal-insulation material 7 above is not particularly limited in shape, it preferably has such a width as to be able to cover the upper surface of crucible 1 and preferably has a thickness corresponding to the distance from the upper surface of crucible 1 to heat-retaining lid 5, for example, not less than 5 mm and not more than 10 mm. With such a thickness, the effects by silicon vapor on heat resistance can be suppressed, and a stable arrangement of heat-retaining lid 5 on second thermal-insulation material 7 can be achieved.

### Third Embodiment

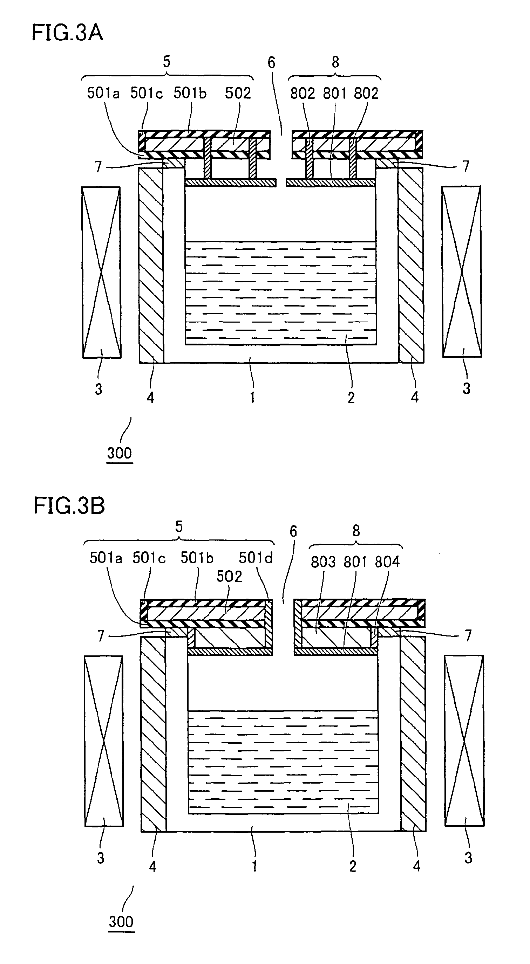

Fig. 3A and Fig. 3B each provide a schematic cross sectional view showing one example of a silicon refining apparatus of a third embodiment, which has the same configuration as that of silicon refining apparatus 200 shown in Fig. 2 except the arrangement of the heat-retaining lid. Therefore, a description of common portions will not be repeated.

A silicon refining apparatus 300 of the third embodiment is a silicon refining apparatus characterized by heat-retaining lid 5 which has a protruding portion 8 at a position inside an inner wall of opening 6 of crucible 1 when placed at the upper surface of crucible 1, is provided with a carbon composite material 801 at least on the molten silicon side of protruding portion 8, and is arranged such that the lowermost portion of protruding portion 8 (the molten silicon 2 side of carbon composite material 801 of Figs. 3A and 3B) is located on the molten silicon 2 side relative to an upper rim of opening 6 of crucible 1 when placed at the upper surface of crucible 1.

It is noted that in Fig. 3A, protruding portion 8 includes a fastening device 802 of a heat resistant material provided for connection between heat-retaining lid 5 and carbon composite material 801. Examples of such fastening device 802 include a bolt and nut made of, for example, a carbon composite.

The provision of such protruding portion 8 solves the aforementioned Problem 1 and Problem 2 and makes it possible to maintain the heat resistance characteristics of the first thermal-insulation material and to suppress fluctuations in heat resistance in the vertical direction of the crucible and moreover, allows protruding portion 8 to function to block contact of silicon vapor with second thermal-insulation material 7 on the upper surface of the crucible, thus makes it possible to suppress solidification of silicon vapor in second thermal-insulation material 7 or the like, and thereby makes it possible to prevent a degradation in thermal-insulation properties of second thermal-insulation material 7.

It is noted that, as illustrated in Fig. 3B, the structure of protruding portion 8 may have such a configuration as to provide a structural body in which a third thermal-insulation material 803, which differs from plate-like member 502 making up heat-retaining lid 5 and composed of carbon felt, is interposed and held between carbon composite material 501a making up heat-retaining lid 5 and carbon composite material 801 provided on the molten silicon 2 side of protruding portion 8 and has lateral surfaces fixed by a carbon composite material 804 and a carbon composite material 501 d.

### Method for Refining Silicon

The present invention relates to a method for refining silicon using the silicon refining apparatus of any of the embodiments above.

As described above, the silicon refining apparatus above is provided with the reduced pressure vessel, and the method for refining silicon in the present invention includes the step of refining raw silicon through removal of impurities from molten silicon held in a crucible by reducing an internal pressure of the reduced pressure vessel.

Examples of a specific process can include vacuum smelting, that is, a method of removing impurities from a molten raw material under a vacuum atmosphere. A case where the raw material is silicon will be hereinafter described.

Generally, among impurities contained in raw silicon such as metallic silicon, P, Al, Ca and the like which have a vapor pressure higher than silicon are removed through the vacuum refining process. Specifically, raw silicon is charged into a crucible provided in the above-described silicon refining apparatus and melted through heating using a heating device. Subsequently, for example, the reduced pressure vessel is set to have a degree of vacuum of not more than 100 Pa and held at a temperature of the order of between 1412°C and 1800°C for a predetermined period of time, which causes evaporation of vapor containing a relatively large amount of impurities relative to molten silicon (hereinafter referred to as impurity containing vapor).

Since the silicon refining apparatus of the present invention has improved heat resistance in the vertical direction of the crucible, such a method for refining silicon provides thermal stability and suppression of deterioration over time.

### Examples

Examples will be hereinafter given to describe the present invention in further detail. The present invention is, however, not limited to these Examples.

### Example 1

Silicon refining (phosphorus removal) was carried out using an apparatus in which a crucible and an inductive heating device for heating the crucible were placed in a reduced pressure vessel capable of reducing an internal pressure with a vacuum pump. The apparatus had a configuration in conformance with Fig. 3A. Test conditions were as follows.

The crucible used was Toyo Tanso Co., Ltd's high-purity graphite crucible that was cylindrical with an outer diameter of 820 mm and a receiving-portion depth of 750 mm. The lateral surface of the crucible was covered with a shaped insulating material having a thickness of 100 mm, which served as first thermal-insulation material 4.

As to heat-retaining lid 5, placed on crucible 1 for use was a disk in which plate-like member 502 made of a carbon felt material having a thickness of 50 mm and a diameter of 920 mm was interposed and held between carbon composite material 501a and carbon composite material 501b each having a thickness of 1-2 mm, and further had lateral surfaces provided with carbon composite material 501c. The shape of the opening in heat-retaining lid 5 is shown in Fig. 4. As shown in Fig. 4, opening 6 was provided in a manner to encompass a central portion of the crucible, and the opening area was approximately 40% of the total area.

Carbon composite material 801 of protruding portion 8 was a disk having an outer diameter of 680 mm and a thickness of 2 mm, which is so placed as to extend into about 20 mm below the upper surface of crucible 1 from heat-retaining lid 5 by means of a bolt and nut made of graphite serving as fastening device 802.

In addition, for heat retention of the upper surface, a ring carbon-felt material having an outer diameter of 820 mm, an inner diameter of 680 mm, and a thickness of 10-20 mm was prepared as second thermal-insulation material 7 and arranged between crucible 1 and heat-retaining lid 5.

As an object to be melted, commercially available metallic silicon was used, and the amount charged was 400 kg.

Molten silicon 2 had a temperature of 1650°C and under the reduced pressure conditions of 1.0 Pa. In the reduced pressure vessel, a measurement of temperature variations between the top and middle portions of crucible 1 in the height direction was about 480°C.

Under such temperature and reduced pressure conditions, a process was repeated which consists of carrying out silicon refining (metallic silicon having an initial concentration of phosphorus of 20 ppm by weight was refined to a final concentration of phosphorus of 0.1 ppm by weight), taking refined molten silicon 2 from crucible 1, and adding fresh metallic silicon. During 25 days of continuous use, no problem was observed in crucible 1 as a whole.

### Comparative Example 1

Silicon refining was carried out under the same conditions as those in Example 1 using the same apparatus as that of the Example except that a heat-retaining lid in the shape shown in Fig. 5 was used as the heat-retaining lid. Temperature variation between the top and middle portions of the crucible in the height direction was about 570°C. After 14 days of continuous use, overheating of the crucible occurred, and therefore, the test was discontinued. The overheating is considered to be caused by deterioration of the crucible (appearance of a fine crack or the like) due to temperature variations in the vertical direction of the crucible.

Although the embodiments and the examples of the present invention have been described as above, it is also originally contemplated to combine configurations of the aforementioned embodiments and examples as appropriate.

It should be understood that the embodiments and the examples disclosed herein are illustrative and non-restrictive in every respect. The scope of the present invention is defined by the terms of the claims rather than the description above, and is intended to include any modifications within the scope and meaning equivalent to the terms of the claims.

### INDUSTRIAL APPLICABILITY

The silicon refining apparatus and the method for refining silicon of the present invention are applicable to silicon refining using a crucible. In particular, the refining apparatus of the present invention is applicable to silicon refining for manufacturing silicon for solar cells from metallic silicon through vacuum refining process.

### REFERENCE SIGNS LIST

1 crucible; 2 molten silicon; 3 heating device; 4 first thermal-insulation material; 5 heat-retaining lid; 501a, 501b, 501c carbon composite material; 502 plate-like member; 6 opening; 7 second thermal-insulation material; 8 protruding portion; 801 carbon composite material; 802 fastening device.

## Claims

1. A silicon refining apparatus comprising, in a reduced pressure vessel:
a crucible (1) capable of holding molten silicon (2);
a heat-retaining lid (5) capable of being placed over said crucible (1); and
a heating device (3) heating the molten silicon (2),
said crucible (1) having a lateral outer-circumferential portion provided with a first thermal-insulation material (4),
said heat-retaining lid (5) being a plate-like member (502) made of carbon felt and provided with a carbon composite material (501a, 501b) at least on opposed main surfaces,
said heat-retaining lid (5) having opposed main surfaces with an opening (6) formed to extend therethrough, and
said carbon composite material (501a) on the main surface of said heat-retaining lid (5) on an said crucible (1) side being so placed as to cover an upper surface of said first thermal-insulation material (4) when said heat-retaining lid (5) is placed at an upper surface of said crucible (1).

2. A silicon refining apparatus comprising, in a reduced pressure vessel:
a crucible (1) capable of holding molten silicon (2);
a heat-retaining lid (5) capable of being placed over said crucible (1); and
a heating device (3) heating the molten silicon (2),
said crucible (1) having a lateral outer-circumferential portion provided with a first thermal-insulation material (4),
said heat-retaining lid (5) being a plate-like member (502) made of carbon felt and provided with a carbon composite material (501a, 501b) at least on opposed main surfaces,
said heat-retaining lid (5) having opposed main surfaces with an opening (6) formed to extend therethrough, and
said crucible (1) having an upper surface having a second thermal-insulation material (7) placed thereon such that the upper surface of said crucible (1) and said heat-retaining lid (5) do not directly contact with each other.

3. The silicon refining apparatus according to claim 2, wherein
said carbon composite material (501a) on the main surface of said heat-retaining lid (5) on a said crucible (1) side is so placed as to cover an upper surface of said first thermal-insulation material (4) when said heat-retaining lid (5) is placed at an upper surface of said crucible (1).

4. A silicon refining apparatus comprising, in a reduced pressure vessel:
a crucible (1) capable of holding molten silicon (2);
a heat-retaining lid (5) capable of being placed over said crucible (1); and
a heating device (3) heating the molten silicon (2),
said crucible (1) having a lateral outer-circumferential portion provided with a first thermal-insulation material (4),
said heat-retaining lid (5) being a plate-like member (502) made of carbon felt and provided with a carbon composite material (501a, 501b) at least on opposed main surfaces,
said heat-retaining lid (5)
having a protruding portion (8) at a position inside an inner wall of an opening of said crucible (1) when placed at an upper surface of said crucible (1),
being provided with a carbon composite material (801) at least on a molten silicon (2) side of said protruding portion (8), and
being arranged such that a lowermost portion of said protruding portion (8) is located on a molten silicon (2) side relative to an upper rim of the opening of said crucible (1) when placed at the upper surface of said crucible (1).

5. The silicon refining apparatus according to any of claims 1 to 3, wherein
said heat-retaining lid (5)
has a protruding portion (8) at a position inside an inner wall of an opening of said crucible (1) when placed at an upper surface of said crucible (1),
is provided with a carbon composite material (801) at least on a molten silicon (2) side of said protruding portion (8), and
is arranged such that a lowermost portion of said protruding portion (8) is located on a molten silicon (2) side relative to an upper rim of the opening of said crucible (1) when placed at the upper surface of said crucible (1).

6. A method for refining silicon using the silicon refining apparatus according to any of claims 1 to 5, comprising the step of refining molten silicon (2) held in said crucible (1) by reducing an internal pressure of said reduced pressure vessel.
